# EUROPÄISCHE PATENTSCHRIFT

(11) **EP 0 427 836 B1**
(45) Veröffentlichungstag und Bekanntmachung des Hinweises auf die Patenterteilung: **22.09.1993**
(21) Anmeldenummer: 90908209.1
(22) Anmeldetag: 29.05.1990
(51) Int. Cl.: F28B 11/00, G01K 17/08

(54) **VERFAHREN UND VORRICHTUNG ZUR ÜBERWACHUNG DES WIRKUNGSGRADES EINES KONDENSATORS**
PROCESS AND DEVICE FOR MONITORING THE EFFICIENCY OF A CONDENSER
PROCEDE ET DISPOSITIF POUR CONTROLER L'EFFICACITE D'UN CONDENSATEUR

(30) Priorität: 07.06.1989 DE 3918531
(43) Veröffentlichungstag der Anmeldung: 22.05.1991
(73) Patentinhaber: TAPROGGE GMBH, D-58300 Wetter (DE)
(72) Erfinder: EIMER, Klaus, D-4030 Ratingen 6 (DE); CZOLKOSS, Wolfgang, D-4600 Dortmund 1 (DE)
(74) Vertreter: Patentanwälte Wenzel & Kalkoff
(86) Internationale Anmeldenummer: EP9000861
(87) Internationale Veröffentlichungsnummer: WO9015298

(56) Entgegenhaltungen:
- EP-A- 0 030 459
- DE-A- 58 950
- DE-A- 3 705 240
- US-A- 3 081 823

## Beschreibung

Die Erfindung betrifft ein Verfahren und eine Vorrichtung zur Überwachung des Wärmeübergangs und damit des Wirkungsgrades eines Kondensators, nach den Merkmalen der Oberbegriffe des Patentansprüche 1 bzw. 7.

Ein derartiges Verfahren, bzw. eine derartige Vorrichtung ist aus der DE-A-37 05 240 bekannt.

Der Wirkungsgrad von Kondensatoren in Kraftwerken hängt in erster Linie vom Wärmeübergang vom Dampf über die Kondensatorrohre in das Kühlwasser ab, der wiederum vom Grad der Verunreinigung der Rohre durch Ablagerungen oder Korrosion maßgebend beeinflußt wird. Die Messung des tatsächlichen Wärmeüberganges an einem Kondensator ist schwierig, wenn sie genau sein soll und eine Verschlechterung zu einem frühen Zeitpunkt anzeigen soll, bevor ein spürbarer Leistungsabfall eintritt. Die übliche Betriebsüberwachung des Kondensators mit Messung der Dampftemperatur bzw. des Dampfdruckes, der Kühlwassereintritts- und -austrittstemperatur, sowie des Kondensatmengenstroms und auch des Kühlwasserstroms ist zu ungenau, um Verunreinigungen der Rohre frühzeitig zu erkennen.

Die hohen Leistungen moderner Kraftwerksblöcke ergeben große Dampf- und Kühlwasserströme mit entsprechend großen Querschnitten der Kühlwasser- und Dampfwege, welche eine genaue Messung von Temperatur- und Geschwindigkeitsverteilung in diesen Querschnitten erforderlich machen, um eine ausreichend genaue Aussage über die effektiven Mittelwerte zu ermöglichen.

Diese Methode ist nicht besonders genau, da darüber hinaus eine Fülle von Randbedingungen den Wirkungsgrad ebenfalls beeinflussen, so daß damit lediglich Verschlechterungen feststellbar sind, die bereits ein alarmierendes Ausmaß erreicht haben. Die Kondensatorreinigungsanlage, welche mittels umlaufender elastischer Reinigungskörper die Kondensatorrohre sauber hält, wird daher eher nach allgemeinen Erfahrungswerten als nach den spezifischen Notwendigkeiten der einzelnen Kraftwerksanlagen betrieben. Dies reicht in vielen Fällen für die Erreichung eines zufriedenstellenden Kondensatorzustandes aus, führt in anderen Fällen jedoch zur "Unterreinigung" - also zu Ablagerungen - oder zur "Überreinigung" - also zu Korrosionserscheinungen bei Kupferlegierungen. Ein optimales "Fahren" des Kondensators durch eine optimale Reinigung mit Hilfe der üblichen Betriebsüberwachung allein ist nicht möglich.

Aus der DE-A-37 05 240 ist eine Meßmethode bekannt, bei der ein oder mehrere Kondensatorrohre eines Kondensators konkret hinsichtlich der Eintrittstemperatur des Kühlwassers, der Austrittstemperatur sowie der Durchströmungsgeschwindigkeit vermessen werden, wobei an einem totgelegten Nachbarrohr die Dampftemperatur gemessen wird. Der Vorteil liegt in der direkten Messung eines tatsächlich an der Kondensierung des Dampfes beteiligten Rohres, so daß die Ausschaltung von Randbedingungen gelingt, die sonst bei eigens für die Messung abgesonderten Rohren in im Bypass betriebenen Modellkondensatoren auftreten können. Zur Erfassung der Durchströmungsgeschwindigkeit des Kühlwassers werden entweder Fremdstoffe wie Salzlösungen oder dergleichen dem Kühlwasser am Rohreintritt zugesetzt, oder es werden markierte Schwammgummikugeln verwendet. Aus der mit entsprechenden Sensoren ermittelten Durchlaufzeit wird die Strömungsgeschwindigkeit im Rohr bestimmt. Beide Meßmethoden sind mit relativ großem Aufwand verbunden, so daß gewissen Schwierigkeiten in der Akzeptanz derartiger Anlagen zu erwarten sind.

Es ist auch schon versucht worden, den Grad der Verschmutzung von Kondensatorrohren durch die Messung des Druckabfalls von der Eintrittsseite zur Austrittsseite zu erfassen. Es hat sich jedoch gezeigt, daß es rauhe und glatte Verunreinigungen gibt, die den Druckabfall unterschiedlich beeinflussen, so daß eine Aussage über den Wärmeübergang nicht exakt genug möglich ist mit einer derartigen Differenzdruckmessung.

Es ist Aufgabe der Erfindung, das bekannte Verfahren und die bekannte Vorrichtung so zu verbessern, daß die Messung ohne Markierungsstoffe oder markierte Kugeln durchgeführt werden kann und darüber hinaus der apparative Aufbau weiter gesenkt werden kann bei einer hohen Zuverlässigkeit der Messung.

Zur Lösung dieser Aufgabe wird ein Verfahren zur Überwachung des Wärmeübergangs und damit des Wirkungsgrades eines Kondensators vorgeschlagen, bei dem die Dampftemperatur T_{S} und die Wasseraustrittstemperatur T₂ nach dem Durchströmen eines Kondensatorrohres am Ende des Rohres mit Hilfe einer Temperatursonde sowie die Wassergeschwindigkeit bei der Durchströmung durch das Rohr gemessen werden, um daraus mit der Wassereintrittstemperatur T₁ des Kühlwassers die Wärmeübergangszahl und davon abgeleitete Größen zu berechnen, das dadurch gekennzeichnet ist, daß zur Messung der Dampftemperatur T_{S} die Durchströmung des Rohres vorübergehend unterbrochen wird, so daß die darin enthaltene Wassersäule die Dampftemperatur T_{S} annimmt, und so das Meßergebnis der Temperatursonde am Ende des Rohres als Dampftemperatur T_{S} ausgewertet wird, und daß zur Messung der Wassergeschwindigkeit die Zeit gemessen wird, die von der Wiederfreigabe der Durchströmung bis zum Temperaturabfall von der Dampftemperatur T_{S} auf annähernd die stationäre Wasseraustrittstemperatur T₂ vergeht.

Außerdem schlägt die Erfindung eine Vorrichtung zur Überwachung des Wärmeübergangs und damit des Wirkungsgrades eines Kondensators vor, mit einem Thermometer im Wassereinlaufbereich zur Erfassung der Wassereintrittstemperatur T₁ des Wassers, mit einer Temperatursonde im Endbereich eines bestimmten Kondensatorrohres zur Erfassung der Wasseraustrittstemperatur T₂ und mit einer Einrichtung zum Auswerten der gemessenen Werte, insbesondere des Wärmeübergangs vom Dampf in das Kühlwasser, die dadurch gekennzeichnet ist, daß das Rohr mit Hilfe eines Dichtkörpers vorübergehend absperrbar ist und daß die Temeratursonde am Ausgang desselben Rohres zur direkten Messung der Wasseraustrittstemperatur und zur indirekten Messung der Dampftemperatur mit ein und derselben Temperatursonde angebracht ist.

Die Erfindung geht von der Erkenntnis aus, daß mit dem vorübergehenden Verschließen des zu messenden Kondensatorrohres Bedingungen geschaffen werden, die mit einfachsten Mitteln folgende Bewertungen bzw. Messungen zulassen:
1. Die an der Durchströmung gehinderte Wassersäule nimmt nach einiger Zeit die Dampftemperatur an. Das Auslaufenlassen dieser Wassersäule nach der Beendigung der Absperrung ermöglicht eine indirekte Messung der Dampftemperataur am Ausgang des Kondensatorrohres.
2. Im stationären Zustand, also bei normal betriebenem Kondensator gestattet dieselbe Meßsonde die Erfassung der Wasseraustrittstemperatur T₂ als dauernd abrufbare Meßgröße.
3. Das Auslaufenlassen der die Dampftemperatur aufweisenden Wassersäule schafft die Möglichkeit der Messung der Wassergeschwindigkeit, da der Zeitpunkt des Wiederbeginns der Strömung bekannt ist und der Temperaturübergang vom Ende der Wassersäule bis annähernd auf die Wasseraustrittstemperatur T₂ mit guter Näherung meßbar ist, so daß sich über die bekannte Rohrlänge die Wassergeschwindigkeit bestimmen läßt.
4. Das Vorbeiströmen der Wassersäule an der Temperatursonde im Ausgangsbereich des zu messenden Kondensatorrohres liefert eine Dampftemperaturverteilung über die Länge des Kondensatorrohres, die infolge von in dem Kondensator befindlicher Luft keineswegs konstant ist. Mit Hilfe dieser Auswertung können Aussagen über den Betrieb der Luftabsaugpumpen, der Heftigkeit der Kühlung des Kondensators und in gewissem Grade auch über die möglichen Leckagen in der Dampfleitung im Niederdruckbereich gemacht werden.

Der bauliche Aufwand für die Erfindung beschränkt sich auf die Erfassung der Wassereintrittstemperatur mit einem normalen Thermometer an annähernd beliebiger Stelle im Kühlwasserzulauf, auf einen verfahrbaren Dichtkörper zum Verschliessen des zu vermessenden Kondensatorrohres und auf die Installation der Temperatursonde im Ausgangsbereich des Kondensatorrohres, und zwar entweder unmittelbar an dem Rohr selbst oder auf dem Dichtkörper reitend. Selbstverständlich bedarf es einer Auswerteinrichtung in Form eines Mikroprozessors und entsprechender Anzeigegeräte, beispielsweise eines Plotters, eines Druckers oder eines Bildschirmes; diese Anzeigemöglichkeiten können selbstverständlich auch nebeneinander vorhanden sein.

Die vorübergehende Unterbrechung der Durchströmung des zu messenden Kondensatorrohres kann durch einen Dichtkörper am Rohreingang oder am Rohrausgang bewirkt werden, es kommt lediglich darauf an, daß die in dem Rohr gefangene Wassersäule zum Stillstand kommt und sich auf die Dampftemperatur erwärmen kann. Selbstverständlich kommt es an dem nicht verschlossenen Ende zu einer Vermischung mit dem Kühlwasser aus der Umgebung, dieser Bereich ist jedoch wegen der Enge üblicher Kondensatorrohre von ca. 20 bis 30 mm relativ gering. Außerdem kann an dieser Stelle eine selbsttätige, strömungsabhängige Klappe beispielsweise in Form von kreissektorartig ausgeschnittenen, am äußeren Rand gehaltenen Gummilappen vorgesehen werden, um auch diese Vermischung auf einem Minimum zu halten.

Zur Vervollständigung des Bildes der Arbeitsweise eines Kondensators kann es angebracht sein, an ein und demselben Kondensator mehrere Rohre bezüglich des Wärmeüberganges zu vermessen. Wenn der Kondensator von Hause aus gegliedert ist, kann pro Feld eine Messung vorgenommen werden, abweichend davon kann die Auswahl der zu vermessenden Rohre repräsentativ für eine gute Gesamtbeurteilung getroffen werden. Es kommt stets darauf an, auch solche Bereiche zu erfassen, die aufgrund der Strömungsverhältnisse oder wegen des ersten Dampfkontaktes bezüglich der Verunreinigungen besonders gefährdet sind. Da der apparative Aufbau zur Durchführung der Erfindung gering ist, fällt die Installation mehrerer Dichtkörper und Temperatursonden kaum ins Gewicht, wenn die Ersparnismöglichkeit durch Fahren des Kondensators mit einem optimalen Wirkungsgrad dagegen gesetzt wird.

Beim Auslaufen der Wassersäule aus dem zu messenden Kondensatorrohr am Ende der Periode, die zur Aufheizung auf die Dampftemperatur gewählt worden ist, kommt es zwangsläufig zu einer Vermischung der Wassersäule mit dem nachdrängenden Kühlwasser auf der Kühlwassereintrittsseite. Dadurch ist das exakte Ende der Wassersäule als Temperatursprung nicht genau festgelegt. Auch gibt es einen relativ raschen Temperaturabfall mit einer nachfolgenden langsameren Temperaturabsenkung, die ihre Ursache darin hat, daß das zunächst auf Dampftemperatur aufgeheizte Rohr nun durch das nachdrängende Kühlwasser in einigen Sekunden auf eine neue Gleichgewichtstemperatur abgekühlt wird. Es ist daher zweckmäßig, für das Ende der Wassersäule eine Definition festzulegen, mit deren Hilfe dann reproduzierbare und genügend exakte Meßergebnisse erzielbar sind.

Eine Möglichkeit ist z.B. die Vorgabe eines prozentualen Abfalls der Temperatur von der vorher vorherrschenden mittleren Dampftemperatur Tₛ beispielsweise um 30 oder 40 Prozent der Temperaturdifferenz Tₛ - T₂. Eine andere Festlegung dieses Endes der Wassersäule mit Hilfe einer Temperaturmessung ist die Berechnung eines Wendepunktes, der in der Funktionsdarstellung der Temperatur über der Zeit nach dem zunächst starken Temperaturabfall und vor der sich anschließenden Annäherung an die neue Gleichgewichtstemperatur ergibt. Gemäß einer dritten Definition kann an diesen Wendepunkt eine Tangente angelegt werden, die die mittlere Dampftemperatur Tₛ in einem bestimmten Punkt schneidet. Dieser Schnittpunkt legt einen bestimmten Zeitpunkt innerhalb des Temperaturüberganges fest, der ebenfalls wie die anderen beiden definierten Zeitpunkte zur mathematischen Auswertung der Zeit für das Ausströmen der Wassersäule genützt werden kann.

Selbstverständlich muß die Wassersäule zunächst beschleunigt werden, ehe sie die Durchströmgeschwindigkeit der Nachbarrohre erlangt, also repräsentativ für die Strömungsgeschwindigkeit ist. Die Beschleunigungsphase kann sehr leicht mit Hilfe einer Differentialgleichung erfaßt werden, so daß bei Kenntnis der Länge eines Kondensatorrohres und der für das Auslaufen der Wassersäule aus dem Rohr gemessenen Zeit die tatsächliche Durchströmgeschwindigkeit mit einem Fehler von weniger als 3 % mit Hilfe eines Mikroprozessors bestimmbar ist. Wird der Einfluß unterschiedlicher Rohrrauhigkeit durch Messung des Druckverlustes des Kondensators berücksichtigt, so kann der Fehler auf unter 1% reduziert werden. Diese Grundlagen sind in Versuchen erarbeitet worden, wobei die günstigsten Ergebnisse bei der Benutzung des genannten Schnittpunktes zwischen der Tangente im Wendepunkt des Temperaturverlaufes mit der mittleren Dampftemperatur Tₛ erzielt worden sind. Die ermittelte Meßzeit ist mit Faktoren zu korrigieren, die theoretisch ermittelt und experimentell abgesichert werden. Diese Faktoren berücksichtigen den Beschleunigungsvorgang sowie unter anderem Mischungseffekte bei der Rohrdurchströmung, die reproduzierbar sind.

Mit Hilfe der Durchströmungsgeschwindigkeit durch das zu vermessende Kondensatorrohr bei Kenntnis des Rohrdurchmessers kann der Volumenstrom bestimmt werden, also die Menge, die pro Zeiteinheit das Rohr passiert. Da die Eingangstemperatur und die Austrittstemperatur aus dem Rohr ebenfalls gemessen werden, kann so die von dem Wasser im stationären Zustand pro Zeiteinheit aufgenommene Wärmemenge erfaßt werden. Da in der geschilderten Weise die Dampftemperatur bestimmbar ist, kann die Wärmedurchgangszahl k von dem Dampf durch das Rohr hindurch in das Wasser berechnet werden. Für seine Bewertung kann zum einen bei Kenntnis des Werkstoffes die Wärmedurchgangszahl k' an neuen Rohren berechnet werden, zum anderen kann an neuen Rohren bzw. an Rohren, die mit Hilfe von besonderen Schwammgummikugeln garantiert ablagerungsfrei sind, ein Referenzwert gemäß der Erfindung festgestellt werden. Anhand eines Vergleiches mit dem Referenzwert kann nun relativ leicht der Verschmutzungsgrad des Kondensators im Bereich des gemessenen Rohres beurteilt und bei zu schlechtem Zustand Abhilfe geschaffen werden. Die Abhilfe besteht darin, daß nun Schwammgummikugeln zur Reinigung in Umlauf gesetzt werden bzw. bei abgenutzten Kugeln neue eingeschleust werden. Möglicherweise ist auch der Einsatz spezieller Reinigungskörper oder eine chemische Behandlung erforderlich, was z.B. von dem Rohrwerkstoff abhängt. Es kommt bei der Erfindung lediglich darauf an, daß konkret an tatsächlich benutzten Wärmetauscherrohren der Wärmeübergang meßbar und damit der derzeitige Wirkungsgrad feststellbar ist.

Es ist bekannt, daß die Dampftemperatur über die Rohrlänge nicht konstant ist. Ursachen dafür sind unterschiedliche Druckverluste der Dampfströmung sowie örtlich unterschiedliche Konzentrationen nicht kondensierbarer Gase.
Gemäß einer Weiterbildung des erfindungsgemäßen Verfahrens kann auf eine einfache Weise der Wärmeübergang auf der Dampfseite beurteilt und damit kontrolliert werden, und zwar mit Hilfe der sogenannten Wilson-Methode. Bei der Wilson-Methode wird die Erscheinung ausgenutzt, daß der Wärmeübergangswiderstand 1/k auf die in dem Rohr strömende Flüssigkeit von der Durchströmungsgeschwindigkeit der Flüssigkeit abhängt, und zwar proportional v⁻⁰^{,8}.Trägt man nun die Wärmeübergangswiderstände über der variierten Strömungsgeschwindigkeit v^{-0,}⁸ auf, so ergibt sich eine Gerade, die durch Extrapolation auf den Wert einer unendlichen Geschwindigkeit (v⁰^{,8}=0) erweitert werden kann. Bei dieser Strömungsgeschwindigkeit tritt kein Wärmeübergangswiderstand zwischen der Rohrwand und dem Kühlwasser auf, so daß in diesem Punkt der Kurve direkt der Wärmeübergangswiderstand zwischen Dampf und Rohraußenseite plus dem bekannten Wärmedurchgangswiderstand durch die Rohrwand abgelesen werden kann.

Die Erfindung macht sich diese Kenntnisse zunutze. Erforderlich sind mehrere Messungen in zeitlichem Abstand hintereinander mit unterschiedlichen Durchflußgeschwindigkeiten des Kühlwassers durch ein Rohr und die dabei gemessene Wärmedurchgangszahl. In der vorangehend beschriebenen Weise wird also eine in einem Rohr gefangengehaltene Wassersäule auf die Dampftemperatur gebracht. Nach dem Öffnen des Rohres um einen vorgegebenen, gedrosselten Betrag durch Zurückziehen des Dichtkörpers, der bis dahin das Rohr verschließt, strömt nun wieder Kühlwasser durch das Rohr hindurch, wegen der Drosselung jedoch mit einer geringeren Geschwindigkeit. Diese Geschwindigkeit wird in der geschilderten Weise gemessen, und anschließend erfolgt mit den gemessenen Temperaturen die Berechnung der Wärmeübergangszahl k.

Diese Messung wird für unterschiedliche Geschwindigkeiten nacheinander durchgeführt, so daß ein Wilson-Diagramm erstellt werden kann. Dabei ist nicht Bedingung, daß das Wilson-Diagramm konkret gezeichnet oder ausgedruckt wird, es genügt deren mathematische Simulation, so daß die Extrapolation für den Geschwindigkeitswert Unendlich möglich ist. Nach der Messung von vier bis sechs unterschiedlichen Geschwindigkeiten ist ein genügend genauer Aussagewert vorhanden, um die Güte des Wärmeübergangs vom Dampf auf das Rohr zu beurteilen. Es kann also erstmals eine zuverlässige Aussage über den Wärmeübergang auf der Dampfseite gemacht werden. Es hat sich nämlich gezeigt, daß nicht nur Lufteinschlüsse im Kondensator den Wärmeübergang beeinträchtigen können, sondern auch Fouling auftreten kann, insbesondere durch Ablagerung von Magnetit.

Nachfolgend werden Ausführungsbeispiele der Erfindung, die in der Zeichnung dargestellt sind, näher erläutert; in der Zeichnung zeigen:
- Fig. 1: eine schematische Darstellung eines Dampfkondensators unter Einbeziehung einer Vorrichtung gemäß der Erfindung,
- Fig. 2: eine Seitenansicht eines Teiles der Vorrichtung gemäß der Erfindung zur vorübergehenden Absperrung der Durchströmung eines zu messenden Kondensatorrohres,
- Fig. 3: eine aus fünf Teilbildern bestehende Seitenansicht desselben, schematisch dargestellten Kondensatorrohres zur Verdeutlichung der Erfindung anhand einer Schrittsequenz,
- Fig. 4: die grafische Darstellung der Funktion Temperatur über der Zeit von der Wiederfreigabe der Durchströmung nach dem Absperren über den Austritt der vorher gefangenen Wassersäule bis zum Erreichen des normalen Beharrungszustandes und
- Fig. 5: eine Seitenansicht gemäß der Figur 2 mit einem modifizierten Dichtkörper.

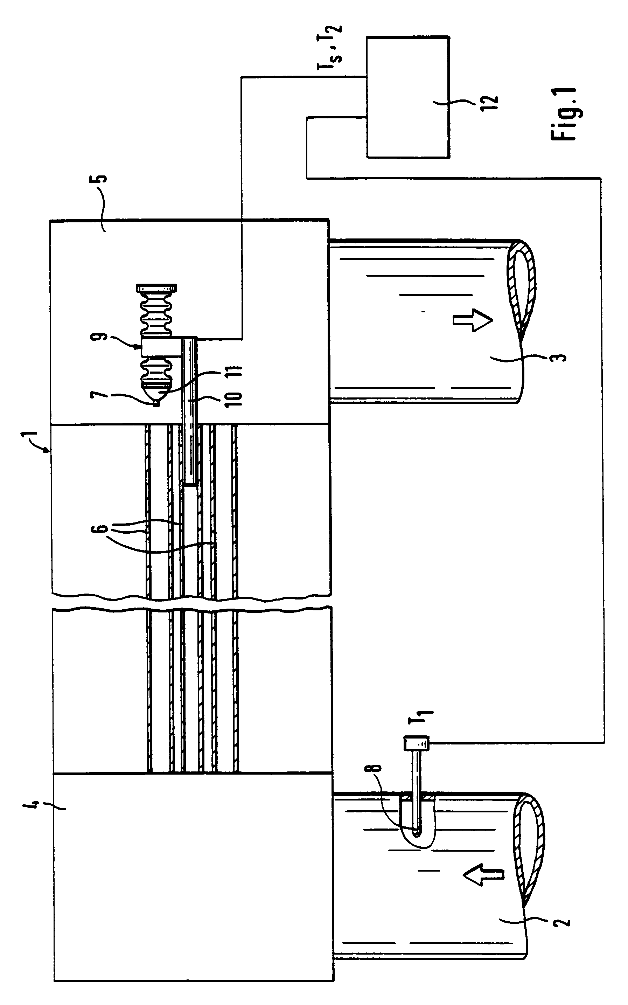

In der Figur 1 ist schematisch ein Dampfkondensator 1 gezeigt, bei dem die Dampfleitung gemäß üblicher Praxis nicht gezeigt ist. Er strömt quer zur Richtung des vom Kühlwasser durchströmten Rohrpaketes und enthält an geeigneter Stelle einen Anschluß für eine Vakuumpumpe zum Absaugen von in dem Dampfraum des Kondensators angesammelter Luft.

Zur Kondensierung des Dampfes läuft über einen Zulauf 2 Kühlwasser aus einem Vorfluter oder aus einem Kühlturm zu, das den Kondensator 1 über einen Auslauf 3 wieder verläßt. Zur gleichmäßigen Verteilung des Kühlwassers auf ein Bündel von Kondensatorrohren 6 ist eine Eintrittskammer 4 vorgesehen, und zur Sammlung des Kühlwassers ist eine ähnlich geformte Austrittskammer 5 am anderen Ende des Kondensators 1 vorhanden.

Zur Erfassung des Cleanliness-Faktors, des Wärmeüberganges bzw. des Wirkungsgrades des Kondensators 1 ist die Meßung der Wassereintrittstemperatur T₁ und der Wasseraustrittstemperatur T₂ erforderlich, was mit einem Thermometer 8 im Zulauf 2 einerseits und mit einer Temperatursonde 7 innerhalb der Austrittskammer 5 andererseits geschieht. Die Temperatursonde 7 ist Bestandteil einer Vorrichtung 9 zur Unterbrechung der Durchströmung innerhalb des zu messenden Kondensatorrohres 6. Die Vorrichtung 9 ist mit Hilfe eines Halterohres 10 in dem benachbarten Kondensatorrohr befestigt. Mit Hilfe einer nicht näher dargestellten Einrichtung kann der Dichtkörper 10 so verfahren werden, daß er das Ende des Kondensatorrohres 6 verschließt. In der Figur 1 ist die zurückgezogene Stellung des Dichtkörpers 10 wiedergegeben.

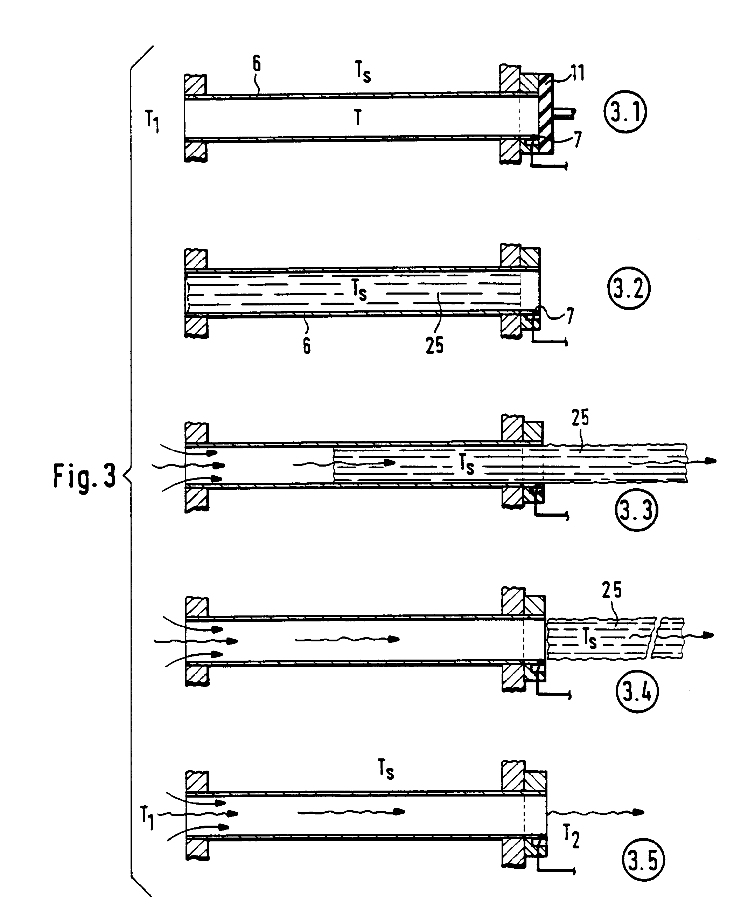

Die geschilderten Komponenten reichen bereits aus, um mit Hilfe einer Einrichtung zur Auswertung 12 den Kondensator 1 hinsichtlich seines Verschmutzungsgrades sicher beurteilen zu können. Die Vorgehensweise wird im Zusammenhang mit der Figur 3 noch genauer beschrieben. In der Figur 1 ist angedeutet, daß die Einrichtung 12 zur Auswertung mit dem Thermometer 8 und der Temperatursonde 7 mit Hilfe von Leitungen verbunden ist. Dies ist ein durchaus gangbarer Weg. Abweichend davon kann jedoch auch eine drahtlose Übermittlung zumindest von der Temperatursonde 7 zu der Einrichtung 12 vorgesehen sein. Die dafür notwendige Energieversorgung kann durch Batterien, durch Potentialunterschiede innerhalb des Kondensators 1 oder durch einen kleinen Generator sichergestellt werden, der seine Energie aus der vorhandenen Strömung bezieht.

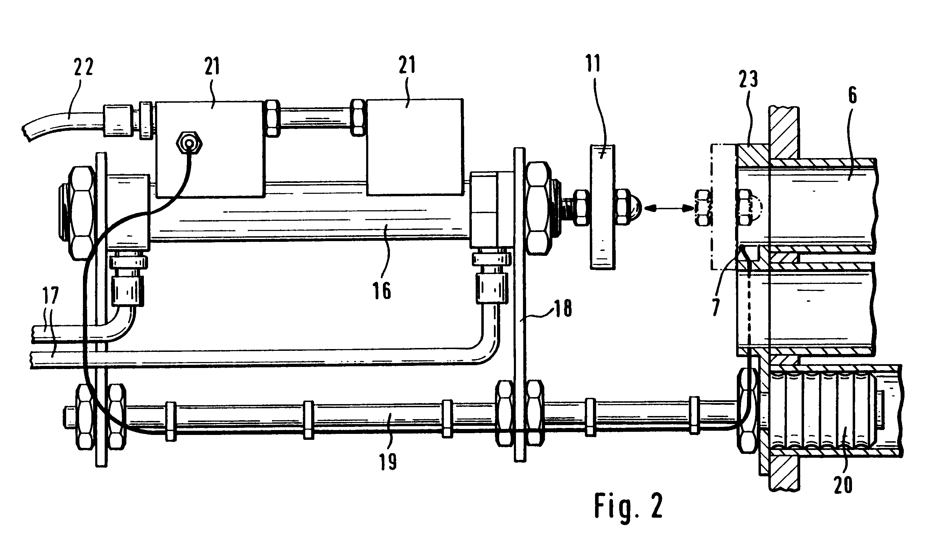

Es ist für die vorübergehende Absperrung der Durchströmung des Kühlwassers durch ein Kondensatorrohr 6 unerheblich, ob der Rohreingang oder der Rohrausgang abgesperrt wird. Es kommt lediglich darauf an, daß eine Absperrung möglich ist und daß der Zeitpunkt der Wiederfreigabe der Durchströmung exakt erfaßbar ist. Selbstverständlich sollte darauf geachtet werden, daß bei zurückgezogenem Dichtkörper die Strömung durch das Kondensatorrohr 6 durch den Dichtkörper nicht behindert ist, damit sich annähernd dieselben stationären Zustände einstellen wie bei den nicht gemessenen Nachbarrohren. In der Figur 1 erfolgt die Bewegung des Dichtkörpers 11 beispielsweise durch einen Hubmagneten, dessen Führungen mit Hilfe von schematisch angedeuteten Bälgen abgedichtet sind. In der Figur 2 wird statt dessen ein hydraulisch oder insbesondere pneumatisch betriebener Zylinder 16 verwendet, der am freien Ende seiner Kolbenstange den Dichtkörper 11 in Form einer einfachen Dichtscheibe trägt. Die Betätigung erfolgt in üblicher Weise über Leitungen 17. Zur Fixierung des Zylinders 16 dient eine Stange 19, die mit Hilfe eines Klemmstopfens 20 innerhalb eines benachbarten, in diesem Fall stillgelegten Kondensatorrohres gehalten ist.

Bei dem hier gezeigten Ausführungsbeispiel wird der Kondensator und damit das gemessene Kondensatorrohr 6 in umgekehrter Richtung durchströmt, als bei dem Ausführungsbeispiel gemäß der Figur 1. Folglich wird wiederum das Rohrende abgedichtet. Außerdem weicht die Anordnung der Temperatursonde 7 von dem vorangehend erläuterten Ausführungsbeispiel ab. Innerhalb einer auf dem Kondensatorboden befestigten kurzen Rohrverlängerung 23 ist die Temperatursonde eingeklebt bzw. in sonstiger Weise dichtend eingesetzt, so daß sie am äußersten Ende des Kondensatorrohres 6 angeordnet ist. Von ihr führt eine Signalleitung zu einem Gehäuse, in dem sich ein Reed-Kontakt 21 befindet. Er dient zur Überwachung des vollständigen Rückzugweges des Zylinders 16 bei geöffnetem Dichtkörper 11, wie in der Figur 2 dargestellt. Mit Hilfe eines weiteren Reed-Kontaktes 21 wird die andere Extremlage des Zylinders 16 überwacht, insbesondere das Verlassen dieser Position bei der Wiederfreigabe der Durchströmung. Die Meßwerte der Temperatursonde 7 sowie die Stellungsanzeigen der Reed-Kontakte 21 werden über ein Kabel 22 zu der Einrichtung 12 zur Auswertung geleitet.

Bei zurückgezogenem Dichtkörper 11 wird die Wassereintrittstemperatur T₁ und die Wasseraustrittstemperatur T₂ gemessen und in der Einrichtung 12 zur Auswertung gespeichert. Soll eine Kontrollmessung durchgeführt werden, so wird das zu messende Kondensatorrohr 6 mit Hilfe des Dichtkörpers 11 verschlossen. Dies wird in dem Bild 3.1 der Figur 3 verdeutlicht. Infolge der Absperrung fehlt die Kühlwirkung des durchströmenden Kühlwassers, vielmehr heizt sich die in dem Kondensatorrohr 6 gefangene Wassersäule 25 (Bild 3.2) langsam auf die Dampftemperatur Tₛ auf. Die Aufheizzeit kann gemessen werden, in der Praxis wird jedoch ein Zeitrelais eingestellt, und am Ende der eingestellten Zeitperiode, beispielsweise nach 10 Minuten, wird der Dichtkörper 11 zurückgezogen und damit das Kondensatorrohr 6 wieder an der Durchströmung beteiligt.

Es ist offensichtlich, daß mit Hilfe der Temperatursonde 7 beim Auströmen der aufgeheizten Wassersäule 25 die Dampftemperatur Tₛ ausreichend genau gemessen werden kann. Es muß betont werden, daß die Wasseraustrittstemperatur T₂ und die Dampftemperatur Tₛ mit ein und derselben Temperatursonde 7 gemessen werden, wodurch ein wesentlicher Beitrag zu einer genauen Messung geleistet wird. Als Temperatursonde kommen Mikro-Mantelthermoelemente, normale Thermoelemente oder sonstige Temperaturfühler in Frage, die flüssigkeitsverträglich, ausreichend schnell sind und den auftretenden Temperaturbereich sicher abdecken.

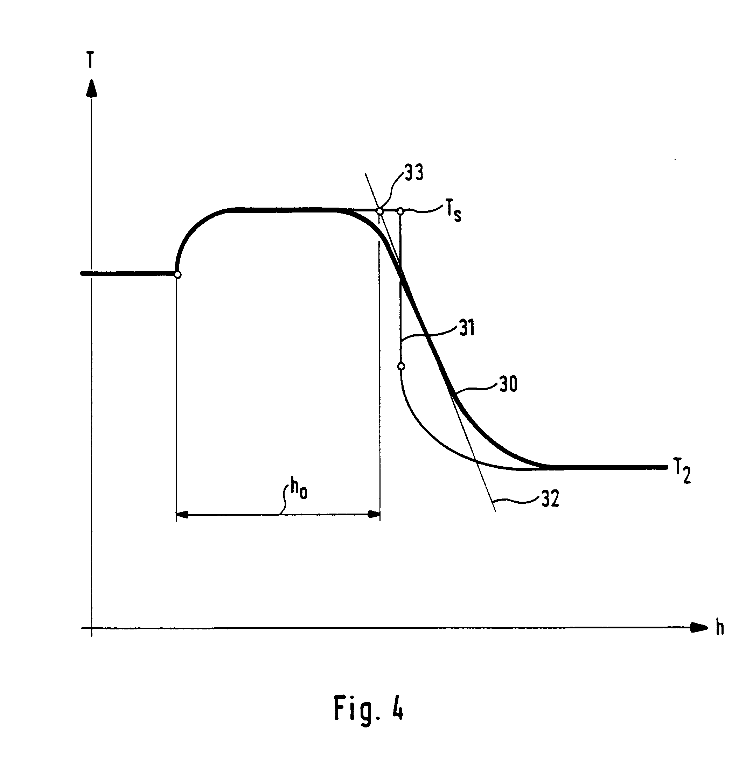

Für die Erfassung der Durchströmungsgeschwindigkeit und damit des Mengenstromes des Kühlwassers muß die Zeit gemessen werden, die vom Zustand des Bildes 3.2 bis zum Zustand des Bildes 3.4 der Figur 3 vergeht. Diese Zeitperiode ist identisch mit der Dauer des Ausströmens der Wassersäule 25 aus dem Kondensatorrohr 6 nach der Wiederfreigabe der Durchströmung. Mit Hilfe dieser Zeitperiode wird die Durchströmungsgeschwindigkeit gemessen. Anhand der Figur 4 wird verdeutlicht, welcher Temperaturverlauf sich an der Temperatursonde 7 praktisch ergibt und in welcher Weise insbesondere das Ende der Zeitmessung festgelegt wird.

Der Beginn der Wiederfreigabe ist besonders leicht durch die Bewegung des Dichtkörpers 11 festzustellen. Bei der Vorrichtung gemäß der Figur 2 wird das Signal des vorderen Reed-Kontaktes 21 als Beginn der zu messenden Zeitperiode angenommen. Um das Ausströmen der Wassersäule 25 aus dem Kondensatorrohr 6 möglichst störungsfrei zu vollziehen, kann die Geschwindigkeit des Zylinders 16 so eingestellt werden, daß sie annähernd der Ausströmgeschwindigkeit der Wassersäule 25 entspricht. Der Beginn der zu messenden Zeitperiode ist in der Figur 4 an der linken Seite des Zeitintervalls hₒ eingetragen. Die zu diesem Zeitpunkt an der Temperatursonde 7 gemessene Temperatur liegt niedriger als die Dampftemperatur Tₛ , jedoch höher als die Wasseraustrittstemperatur T₂, weil die Temperatursonde 7 zwar geschützt im Rohranfang des Kondensatorrohres 6 liegt, jedoch durchaus gegenüber der Dampftemperatur Tₛ kühlenden Einflüssen ausgesetzt ist, wie z.B. einer wassergekühlten Rohrverlängerung 23 und einem wassergekühlten Dichtkörper 11. Nach der Wiederfreigabe der Durchströmung steigt folglich die Temperatur sprunghaft und dann asymptotisch auf die durchschnittliche Dampftemperatur Tₛ an, die folglich erst kurz nach dem Zurückziehen des Dichtkörpers 11 gemessen wird.

Bei idealen Voraussetzungen, also bei einer perfekten Trennung zwischen der Wassersäule 25, die auf Dampftemperatur gebracht ist, und der nachdrängenden Wassersäule würde sich ein Temperatursprung ergeben, der in der Figur 4 mit einer vertikalen Linie 31 wiedergegeben ist. Die nachfolgende asymptotische Annäherung an die Temperatur T₂ würde auch bei idealen Bedingungen in der gezeichneten Weise verlaufen, weil das vormals auf Dampftemperatur Tₛ aufgeheizte Kondensatorrohr 6 langsam durch das nachdrängende Kühlwasser abgekühlt wird. In der Praxis verläuft jedoch die Temperatur gemäß der fett ausgezogenen Linie 30, die den tatsächlichen Verlauf wiedergibt. An ihr läßt sich ein Wendepunkt definieren, durch den eine Tangente 32 gelegt werden kann. Die Tangente 32 schneidet das Niveau der Dampftemperatur Tₛ im Schnittpunkt 33, und dieser Schnittpunkt wird bei der mathematischen Auswertung der Meßwerte als Ende der Zeitperiode angenommen, die für das Ausströmen der Wassersäule 25 aus dem Kondensatorrohr 6 vergeht.

Ebenso hätte der Wendepunkt selbst oder ein anderer Punkt annähernd beliebiger, reproduzierbarer Definition genommen werden können, um das Ende des Zeitintervalls zu bestimmen. Es kommt lediglich darauf an, daß der nachgeordnete Rechner in akzeptabler Zeit in der Lage ist, das Ende des Zeitintervalls zu berechnen und zu der Rohrlänge des Kondensatorrohres 6 in Beziehung zu setzen. Unter Berücksichtigung der erforderlichen Beschleunigung auf die stationäre Strömungsgeschwindigkeit und Korrekturen für Mischungseffekte kann so diese stationäre Durchströmungsgeschwindigkeit berechnet werden. Sie dient als Grundlage für die Bestimmung der Wärmeaufnahme des durchströmenden Kühlwassers, die sich aus dem Produkt der Differenz zwischen der Wasserausgangstemperatur T₂ und der Wassereingangstemperatur T₁ mit dem Volumenstrom, dem spez. Gewicht und der spez. Wärmekapazität des Kühlwassers ergibt.

Zur Vermeidung einer Vermischung des Kühlwassers mit der eingeschlossenen Wassersäule 25 bei geschlossenem Dichtkörper 11 kann am Rohreintritt eine Klappe (nicht dargestellt) angebracht sein, die beispielsweise aus sechs oder acht Kreissektoren besteht und sich strömungsbedingt öffnet. Sie läßt selbstverständlich Schwammgummikugeln, die zur Reinigung eingesetzt werden, ohne weiteres durch. Selbstverständlich kann hier auch eine weitere Zwangsverschließung vorgesehen sein, beispielsweise durch eine weitere Anordnung gemäß der Figur 2. Allerdings erhöht sich dadurch der Aufwand um das Doppelte, ohne ein in dieser Höhe besseres Ergebnis zu erzielen. Es kommt nämlich beim Ausströmen der Wassersäule 25 immer noch zu einem "Ausfransen" am hinteren Ende der Wassersäule, das auch nicht durch einen Zwangsverschluß beseitigt werden kann.

Falls die Einbaumöglichkeiten eine Befestigung der Einrichtung zum Verschließen eines Kondensatorrohres 6 nicht an dem Kondensatorboden gestatten bzw. falls die Überprüfung dieser Einrichtung während des Betriebes gewünscht wird, kann in Verlängerung eines Kondensatorrohres 6 eine Rohrverlängerung durch die Kammerwandung der Austrittskammer 5 installiert und der Schließmechamismus außerhalb des Kondensators angeordnet werden. Im übrigen stehen für diese Art der Anordnung oder für die zeichnerisch dargestellte alle Möglichkeiten der Betätigung zur Verfügung, nämlich Elektromagnete, Motoren mit Spindeln, Drehklappen, Schwenkklappen usw.

In der Figur 1 ist angedeutet, daß die Temperatursonde 7 auf dem Dichtkörper 11 reitet, während in der Figur 2 die Temperatursonde 7 fest an dem Kondensatorrohr 6 installiert ist. Es kommt auf den Einzelfall an, welcher Lösung der Vorzug gegeben wird. Das Ausführungsbeispiel gemäß der Figur 1 ist immer nur dann erfolgreich anwendbar, wenn sich im dem Kondensator keine zu großen Querströmungen ergeben, sondern die Wassersäule relativ ungestört aus dem Kondensatorrohr 6 austritt, so daß der an der Temperatursonde 7 gemessene Wert auch tatsächlich unverfälscht die Temperatur der Wassersäule angibt. Im übrigen bleibt es dem Einzelfall vorbehalten, die beste Position innerhalb eines Kondensators 1 nach Erfahrung oder Versuchen festzulegen, da die Größe der Kammern 4 und 5, die Durchtrittsgeschwindigkeit des Kühlwassers durch die Kondensatorrohre 6 und deren Durchmesser die ausschlaggebenden Parameter sind. Selbstverständlich kann auch das Thermometer 8 innerhalb der Einlaufkammer 4 untergebracht werden, insbesondere in der Nähe des Kondensatorbodens auf dieser Seite, allerdings ist die Nähe zu dem zu vermessenden Kondensatorrohr 6 nicht erforderlich, wenn das in die Eintrittskammer einströmende Wasser von gleichmäßiger Temperatur ist. Dies gilt nicht bei Messung von Kondensatorrohren im 2. Weg bei Kondensatoren mit zwei (oder mehr) Wegen. Da in diesen Fällen die Eintrittstemperatur schwankt und ungleichmäßig verteilt ist, muß das Thermometer 8 direkt am Rohreintritt jedes zu messenden Rohres angeordnet sein.

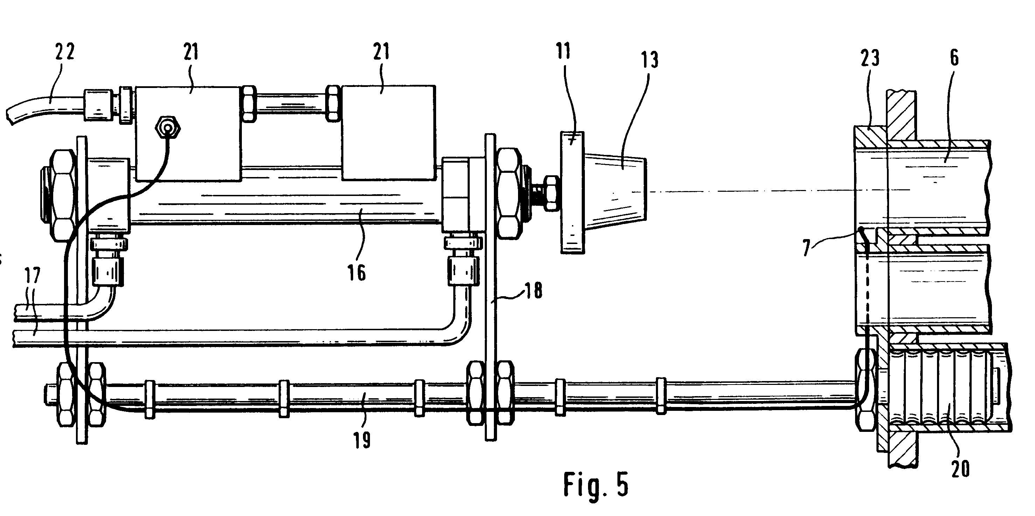

Die Figur 5 entspricht weitgehend der Figur 2, so daß auf eine Erläuterung im einzelnen verzichtet wird. Der wesentliche Unterschied besteht darin, daß die Stange 19 länger ausgebildet ist und somit der Zylinder 16 von der Rohrverlängerung 23 weiter abgerückt ist. Außerdem trägt der Dichtkörper 11 auf der dem Kondensatorrohr 6 zugewandten Seite einen Konus 13 mit dessen Hilfe der Eintritt des Kondensatorrohres 6 dosiert in der Weise verschlossen werden kann, daß unterschiedliche Strömungsgeschwindigkeiten erzeugt werden können. Dazu wird der Dichtkörper 11 nicht entweder auf die Rohrverlängerung 23 aufgesetzt oder zurückgezogen, sondern in unterschiedlichen Abständen vor der Rohrverlängerung 23 positioniert. Wegen der sich ändernden Querschnittsflächen des Konus 13 im Abstand von dem Dichtkörper 11 ergeben sich dadurch unterschiedliche freie Querschnitte am Eintritt des Kondensatorrohres 6, so daß sich Geschwindigkeiten des Kühlwassers ergeben, die unter der max. Geschwindigkeit liegen, die bei völlig freiem Rohrquerschnitt erreicht wird.

Diese zusätzliche Einrichtung kann dazu ausgenutzt werden, eine Aussage über den Wärmeübergang auf der Dampfseite des Kondensatorrohres 6 zu erhalten. Es wurde eingangs bereits beschrieben, wie mit Hilfe der Wilson-Methode eine derartige Aussage getroffen werden kann. Es muß dafür gesorgt werden, daß der Wärmeübergang bei unterschiedlichen Strömungsgeschwindigkeiten des Kühlwassers durch das Kondensatorrohr festgestellt wird. Mit Hilfe der genannten Zusatzeinrichtung kann nun durch eine entsprechende Positionierung des Dichtkörpers 11 und damit des Konus 13 innerhalb der Rohrverlängerung 23 jeweils nur ein Teil-Querschnitt des Kondensatorrohres 6 freigegeben werden, so daß sich unterschiedliche Geschwindigkeiten einstellen. Die tatsächliche Geschwindigkeit, die sich einstellt, wird in der geschilderten Weise durch Auslaufenlassen der auf die Dampftemperatur erwärmten Wassersäule ermittelt, die einige Minuten nach dem völligen Verschließen des entsprechenden Kondensatorrohres 6 erreicht wird. Nach dem dosierten Öffnen wird dann zunächst die Strömungsgeschwindigkeit festgestellt und anschließend, wenn sich wiederum stationäre Zustände eingestellt haben, wird der Wärmeübergang durch den Temperaturvergleich zwischen Eingangs- und Ausgangstemperatur festgestellt.

Um zu verwertbaren Aussagen über den dampfseitigen Wärmeübergang zu kommen, ist theoretisch für die Dauer der Messungen zur Erstellung des Wilson-Diagramms ein konstanter Zustand auf der Dampfseite erforderlich. Dies trifft in jedem Fall für Verhältnisse zu, bei denen eine Beeinträchtigung des Wärmeüberganges durch Fouling auf der Dampfseite zu verzeichnen ist, beispielsweise durch die Ablagerung von Magnetit. Bei Lufteinschlüssen ändern sich die Verhältnisse relativ rasch, wenngleich durchaus stationäre Zustände auftreten können, weil z.B. eine bestimmte Luftmenge in dem Kondensator enthalten ist, die sich an bevorzugter Stelle ansammelt. Im übrigen kommt es in erster Linie darauf an, festzustellen, ob durch Maßnahmen auf der Rohrinnenseite der Wärmeübergang verbessert werden muß oder ob durch eine nachhaltige Störung des Wärmeüberganges auf der Dampfseite klar wird, daß durch eine intensivere Reinigung der Rohrinnenseite keine Verbesserung des Wärmeüberganges mehr erzielt werden kann. Gegebenenfalls muß dann ein schlechter Wirkungsgrad in Kauf genommen werden bzw. bei einer Revision die Störungen infolge von Ablagerungen auf der Dampfseite beseitigt werden.

## Patentansprüche

1. Verfahren zur Überwachung des Wärmeübergangs und damit des Wirkungsgrades eines Kondensators (1), bei dem die Dampftemperatur T_{S}, die Wassereintrittstemperatur T₁ des Kühlwassers, die Wasseraustrittstemperatur T₂ nach dem Durchströmen eines Kondensatorrohres (6) am Ende des Rohres mit Hilfe einer Temperatursonde (7) sowie die Wassergeschwindigkeit bei der Durchströmung durch das Rohr (6) gemessen wird, um daraus die Wärmeübergangszahl und davon abgeleitete Größen zu berechnen, dadurch **gekennzeichnet**, daß zur Messung der Dampftemperatur T_{S} die Durchströmung des Rohres (6) vorübergehend unterbrochen wird, so daß die darin enthaltene Wassersäule die Dampftemperatur T_{S} annimmt, und so das Meßergebnis der Temperatursonde (7) am Ende des Rohres vorübergehend als Dampftemperatur T_{S} ausgewertet wird, und daß zur Messung der Wassergeschwindigkeit die Zeit gemessen wird, die von der Wiederfreigabe der Durchströmung bis zum Temperaturabfall von der Dampftemperatur T_{S} auf annähernd die Wasseraustrittstemperatur T₂ vergeht.

2. Verfahren nach Anspruch 1, dadurch **gekennzeichnet**, daß zur Unterbrechung der Durchströmung der Rohraustritt oder der Rohreintritt verschlossen wird.

3. Verfahren nach Anspruch 1 oder 2, dadurch **gekennzeichnet**, daß zur Festlegung des Endes der Zeitperiode, die für das Ausströmen der Wassersäule (25) aus dem Kondensatorrohr (6) vergeht, im Verlauf des Temperaturabfalls der Schnittpunkt einer Tangente im Wendepunkt des Temperaturverlaufs über die Zeit mit einer mittleren Dampftemperatur T_{S} gewählt wird.

4. Verfahren nach einem der vorhergehenden Ansprüche, dadurch **gekennzeichnet**, daß zur Unterbrechung der Durchströmung das eine Ende des Rohres (6) zwangsweise geschlossen und das andere Ende selbsttätig strömungsabhängig verschlossen wird.

5. Verfahren nach einem der vorhergehenden Ansprüche, dadurch **gekennzeichnet**, daß das Schließen und Öffnen des zu messenden Kondensatorrohres (6) von einer Stelle außerhalb des Kondensators (1) durch die Wand der entsprechenden Kondensatorkammer (5) hindurch vorgenommen wird.

6. Verfahren nach einem der vorhergehenden Ansprüche, dadurch **gekennzeichnet**, daß zur Beurteilung des Wärmeübergangs auf der Dampfseite mehrere Messungen bei unterschiedlichen Geschwindigkeiten vorgenommen und nach dem Wilson-Verfahren ausgewertet werden.

7. Vorrichtung zur Überwachung des Wärmeübergangs und damit des Wirkungsgrades eines Kondensators (1) mit einem Thermometer (8) im Wassereinlaufbereich zur Erfassung der Wassereintrittstemperatur T₁ des Wassers, mit einer Temperatursonde (7) im Endbereich eines bestimmten Kondensatorrohres (6) zur Erfassung der Wasseraustrittstemperatur T₂ und mit einer Einrichtung zum Auswerten der gemessenen Werte, insbesondere des Wäremeüberganges von dem Dampf in das Kühlwasser, dadurch **gekennzeichnet**, daß das Rohr (6) mit Hilfe eines Dichtkörpers (11) vorübergehend absperrbar ist und daß die Temperatursonde (7) am Ausgang desselben Rohres (6) zur direkten Messung der Wasseraustrittstemperatur und zur indirekten Messung der Dampftemperatur mit ein und derselben Temperatursonde (7) angebracht ist.

8. Vorrichtung nach Anspruch 7, dadurch **gekennzeichnet**, daß das Thermometer (8) zur Erfassung der Wassereintrittstemperatur T₁ des Wassers oder ein entsprechender Temperaturfühler unmittelbar am Rohreingang des zu messenden Rohres (6) angeordnet ist.

9. Vorrichtung nach Anspruch 7 oder 8, dadurch **gekennzeichnet**, daß der Dichtkörper (11) mit Hilfe eines pneumatisch oder hydraulisch betätigbaren Zylinders (16) in Längsrichtung des Rohres (6) verschiebbar angeordnet ist.

10. Vorrichtung nach einem der Ansprüche 7 bis 9, dadurch **gekennzeichnet**, daß der Dichtkörper (11) auf der Rohraustrittsseite angeordnet ist.

11. Vorrichtung nach Anspruch 10, dadurch **gekennzeichnet**, daß auf der Rohreintrittsseite eine elastische Klappe angebracht ist.

12. Vorrichtung nach Anspruch 10 oder 11, dadurch **gekennzeichnet**, daß die Temperatursonde (7) für die Wasseraustrittstemperatur T₂ an dem Dichtkörper (11) angebracht ist.

13. Vorrichtung nach einem der Ansprüche 7 bis 9, dadurch **gekennzeichnet**, daß der Dichtkörper (11) auf der Rohreintrittsseite angeordnet ist.

14. Vorrichtung nach einem der Ansprüche 7 bis 13, dadurch **gekennzeichnet**, daß der Dichtkörper (11) um vorwählbare Beträge auffahrbar und damit die Durchströmungsgeschwindigkeit durch das Kondensatorrohr (6) einstellbar ist.

15. Vorrichtung nach Anspruch 14, dadurch **gekennzeichnet**, daß der Dichtkörper (11) einen Dosierkörper trägt, dessen Querschnittsfläche mit zunehmender Entfernung von dem Dichtkörper (11) abnimmt.

16. Vorrichtung nach Anspruch 15, dadurch **gekennzeichnet**, daß der Dosierkörper ein Konus (13) ist.

## Claims

1. Method for monitoring the heat transfer and hence the efficiency of a condenser (1), in which are measured the steam temperature T_{S}, the water inlet temperature T₁ of the cooling water, the water outlet temperature T₂ after flowing through a condenser pipe (6) at the end of the pipe by means of a temperature sensor (7) and also the water speed during flow through the pipe (6), in order to calculate therefrom the heat transfer coefficient and quantities derived therefrom, characterised in that to measure the steam temperature T_{S} the flow through the pipe (6) is temporarily interrupted, so that the water column contained therein assumes the steam temperature T_{S}, and so the measurement result of the temperature sensor (7) at the end of the pipe is temporarily evaluated as the steam temperature T_{S}, and in that to measure the water speed, the time which passes from re-release of throughflow to the temperature drop from the steam temperature T_{S} to approximately the water outlet temperature T₂ is measured.

2. Method according to claim 1, characterised in that the pipe outlet or the pipe inlet is closed to interrupt the throughflow.

3. Method according to claim 1 or 2, characterised in that to fix the end of the period of time which passes for flow of the water column (25) out of the condenser pipe (6), in the course of the temperature drop the point of intersection of a tangent at the turning point of the temperature curve over time with a mean steam temperature T_{S} is selected.

4. Method according to any of the preceding claims, characterised in that to interrupt the throughflow, one end of the pipe (6) is forcibly closed and the other end is automatically closed as a function of flow.

5. Method according to any of the preceding claims, characterised in that closing and opening of the condenser pipe (6) to be measured is performed from a point outside the condenser (1) through the wall of the corresponding condenser chamber (5).

6. Method according to any of the preceding claims, characterised in that to assess the heat transfer on the steam side several measurements are taken at different speeds and evaluated by the Wilson method.

7. Device for monitoring the heat transfer and hence the efficiency of a condenser (1) with a thermometer (8) in the water inlet region for detecting the water inlet temperature T₁ of the water, with a temperature sensor (7) in the end region of a certain condenser pipe (6) for detecting the water outlet temperature T₂ and with a device for evaluating the measured values, in particular the heat transfer from the steam to the cooling water, characterised in that the pipe (6) can be shut off temporarily by means of a sealing body (11) and in that the temperature sensor (7) is mounted at the outlet of the same pipe (6) for direct measurement of the water outlet temperature and for indirect measurement of the steam temperature with one and the same temperature sensor (7).

8. Device according to claim 7, characterised in that the thermometer (8) for detecting the water inlet temperature T₁ of the water or a corresponding temperature sensor is arranged directly at the pipe inlet of the pipe (6) to be measured.

9. Device according to claim 7 or 8, characterised in that the sealing body (11) is displaceable in the longitudinal direction of the pipe (6) by means of a pneumatically or hydraulically operated cylinder (16).

10. Device according to any of claims 7 to 9, characterised in that the sealing body (11) is arranged on the pipe outlet side.

11. Device according to claim 10, characterised in that on the pipe inlet side is mounted a resilient flap.

12. Device according to claim 10 or 11, characterised in that the temperature sensor (7) for the water outlet temperature T₂ is mounted on the sealing body (11).

13. Device according to any of claims 7 to 9, characterised in that the sealing body (11) is arranged on the pipe inlet side.

14. Device according to any of claims 7 to 13, characterised in that the sealing body (11) can be driven by preselected amounts and hence the rate of throughflow through the condenser pipe (6) is adjustable.

15. Device according to claim 14, characterised in that the sealing body (11) carries a metering body of which the cross-sectional area decreases with increasing distance from the sealing body (11).

16. Device according to claim 15, characterised in that the metering body is a cone (13).

## Revendications

1. Procédé pour contrôler la transmission de chaleur et donc l'efficacité d'un condensateur (1) dans lequel la température de la vapeur T_{S}, la température d'arrivée de l'eau T₁ de l'eau de refroidissement, la température de sortie de l'eau T₂ après la traversée d'un tube de condensateur (6) à l'extrémité du tuyau à l'aide d'une sonde de température (7) ainsi que la vitesse de l'eau lors de la traversée du tube (6) sont mesurées pour calculer, à partir de ces données, le coefficient de transmission thermique et des grandeurs dérivées de celui-ci, **caractérisé en ce** que la traversée du tube (6) est provisoirement interrompue pour la mesure de la température de la vapeur T_{S} si bien que la colonne d'eau qui y est contenue prend la température de la vapeur T_{S} et que le résultat de mesure de la sonde de température (7) à l'extrémité du tube est provisoirement exploitée comme température de la vapeur T_{S} et que le temps qui passe du nouveau déblocage de la traversée jusqu'à la chute de température de la température de la vapeur T_{S} à approximativement la température de sortie de l'eau T₂ est mesuré pour mesurer la vitesse de l'eau.

2. Procédé selon la revendication 1, **caractérisé en ce** que la sortie du tube ou l'entrée du tube est fermée pour interrompre la traversée.

3. Procédé selon la revendication 1 ou 2, **caractérisé en ce** que dans la courbe de la chute de température l'intersection d'une tangente dans le point de retour de la courbe de température par le temps avec une température de la vapeur moyenne T_{S} est choisie pour fixer la fin de la période de temps qui passe pour l'écoulement de la colonne d'eau (25) hors du tube de condensateur (6), .

4. Procédé selon l'une des revendications précédentes, **caractérisé en ce** que, pour interrompre la traversée, l'une des extrémités du tube (6) est fermée par force et l'autre extrémité est fermée automatiquement en fonction de l'écoulement.

5. Procédé selon l'une des revendications précédentes, **caractérisé en ce** que la fermeture et l'ouverture du tube de condensateur à mesurer (6) est effectuée à partir d'un endroit à l'extérieur du condensateur (1) à travers la paroi du compartiment correspondant du condensateur (5).

6. Procédé selon l'une des revendications précédentes, **caractérisé en ce** que, pour évaluer la transmission de chaleur du côté de la vapeur, plusieurs mesures sont effectuées à différentes vitesses et sont exploitées selon le procédé de Wilson.

7. Dispositif pour contrôler la transmission thermique et donc le coefficient d'efficacité d'un condensateur (1) avec un thermomètre (8) dans la zone d'entrée de l'eau pour détecter la température d'arrivée de l'eau T₁ de l'eau, avec une sonde de température (7) dans la zone d'extrémité d'un certain tube de condensateur (6) pour détecter la température de sortie de l'eau T₂ et avec un dispositif pour exploiter les valeurs mesurées, en particulier la transmission thermique de la vapeur à l'eau de refroidissement, **caractérisé en ce** que le tube (6) peut être obturé provisoirement à l'aide d'un corps d'étanchéité (11) et que la sonde de température (7) est fixée à la sortie du même tube (6) pour la mesure directe de la température de sortie de l'eau et pour la mesure indirecte de la température de la vapeur avec une même sonde de température (7).

8. Dispositif selon la revendication 7, **caractérisé en ce** que le thermomètre (8) pour détecter la température d'arrivée de l'eau T₁ ou une sonde de température correspondante est placée directement à l'entrée du tube du tube à mesurer (6).

9. Dispositif selon la revendication 7 ou 8, **caractérisé en ce** que le corps d'étanchéité (11) est placé en étant translatable dans le sens longitudinal du tube (6) à l'aide d'un vérin (16) qui peut être actionné de manière pneumatique ou hydraulique.

10. Dispositif selon l'une des revendications 7 à 9, **caractérisé en ce** que le corps d'étanchéité (11) est placé sur le côté de la sortie du tube.

11. Dispositif selon la revendication 10, **caractérisé en ce** qu'un clapet élastique est fixé sur le côté de l'entrée du tube.

12. Dispositif selon la revendication 10 ou 11, **caractérisé en ce** que la sonde de température (7) pour la température de sortie de l'eau T₂ est fixée sur le corps d'étanchéité (11).

13. Dispositif selon l'une des revendications 7 à 9, **caractérisé en ce** que le corps d'étanchéité (11) est fixé sur le côté de l'entrée du tube.

14. Dispositif selon l'une des revendications 7 à 13, **caractérisé en ce** que le corps d'étanchéité (11) peut être avancé de valeurs qui peuvent être présélectionnées et que la vitesse de traversée à travers le tube du condensateur (6) est ainsi réglable.

15. Dispositif selon la revendication 14, **caractérisé en ce** que le corps d'étanchéité (11) porte un corps de dosage dont la surface de la section diminue plus on s'éloigne du corps d'étanchéité (11).

16. Dispositif selon la revendication 15, **caractérisé en ce** que le corps de dosage est un cône (13).
